# EUROPÄISCHE PATENTSCHRIFT

(11) **EP 3 423 795 B1**
(45) Veröffentlichungstag und Bekanntmachung des Hinweises auf die Patenterteilung: **16.06.2021**
(21) Anmeldenummer: 17707193.3
(22) Anmeldetag: 13.02.2017
(51) Int. Cl.: G01F 23/284, G01F 23/292, G01S 7/282, G01S 13/10, G01S 13/30, G01S 13/36, G01S 13/88

(54) **VERFAHREN ZUR MESSUNG DES FÜLLSTANDS EINES IN EINEM BEHÄLTER BEFINDLICHEN FÜLLGUTES MITTELS TERAHERTZ-PULSEN UND FÜLLSTANDMESSGERÄT**
PROCESS FOR MEASURING THE LEVEL OF A BULK MATERIAL IN A CONTAINER BY TERAHERTZ PULSES AND LEVEL SENSING DEVICE
PROCÉDÉ DE MESURE DU NIVEAU D'UN MATÉRIAU DE REMPLISSAGE DANS UN RÉCIPIENT PAR DES IMPULSIONS TÉRAHERTZ ET DISPOSITIF DE MESURE DU NIVEAU

(30) Priorität: 02.03.2016 DE 102016103740
(43) Veröffentlichungstag der Anmeldung: 09.01.2019
(73) Patentinhaber: Endress+Hauser SE+Co. KG, 79689 Maulburg (DE)
(72) Erfinder: BLÖDT, Thomas, 79585 Steinen (CH)
(74) Vertreter: Andres, Angelika Maria
(86) Internationale Anmeldenummer: PCT/EP2017/053100
(87) Internationale Veröffentlichungsnummer: WO 2017/148688

(56) Entgegenhaltungen:
- EP-A1- 1 235 059
- EP-A2- 1 072 871
- EP-A2- 2 026 046
- WO-A1-01/61287
- WO-A1-2008/012029
- DE-A1-102012 011 165
- SE-A1- 1 200 072

## Beschreibung

Die Erfindung betrifft ein Verfahren zur Messung des Füllstands eines in einem Behälter befindlichen Füllgutes mittels Terahertz-Pulsen, sowie ein zur Ausführung dieses Verfahrens geeignetes Füllstandsmessgerät.

In der Automatisierungstechnik, insbesondere in der Prozessautomatisie-rungstechnik, werden vielfach Feldgeräte eingesetzt, die zur Erfassung und/oder Beeinflussung von Prozessvariablen dienen. Zur Erfassung von Prozessvariablen dienen Sensoren, die beispielsweise in Füllstandsmess-geräten, Durchflussmessgeräten, Druck- und Temperaturmessgeräten, pH-Redoxpotential-Messgeräten, Leitfähigkeitsmessgeräten, usw. integriert sind, welche die entsprechenden Prozessvariablen Füllstand, Durchfluss, Druck, Temperatur, pH-Wert, Redoxpotential bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle diejenigen Geräte bezeichnet, die prozessnah eingesetzt werden und die prozessrelevante Informationen liefern oder verarbeiten. Im Zusammenhang mit der Erfindung werden unter Feldgeräten also auch Remote I/Os, Funkadapter bzw. allgemein elektronische Komponenten verstanden, die auf der Feldebene angeordnet sind. Eine Vielzahl solcher Feldgeräte wird von der Firma Endress + Hauser hergestellt und vertrieben.

Zur Füllstandsmessung haben sich berührungslose Messverfahren etabliert, da sie robust und wartungsarm sind. Ein weiterer Vorteil besteht darin, dass mittels dieser Verfahren quasi stufenlos gemessen werden kann. Hier hat sich vor allem das nach dem Puls-Laufzeit-Prinzip arbeitende Radar-basierte Messverfahren etabliert. Bei diesem Messverfahren, welches auch unter dem Namen Pulsradar bekannt ist, werden kurze Mikrowellenpulse periodisch mit einer festen Wiederholfrequenz (fₚᵤₗₛ), z.B. in einer Größenordnung von 1 bis 2 MHz in Richtung des Füllguts gesendet. Deren in Richtung der Sende- und Empfangseinrichtung zurück reflektierten Signalanteile werden anschließend nach einer von der im Behälter zurückgelegten Wegstrecke abhängigen Laufzeit t empfangen. Mithilfe der gemessenen Laufzeit t wird der Füllstand berechnet. Ein nach diesem Messverfahren arbeitendes Füllstandsmessgerät ist unter anderem in der Veröffentlichungsschrift EP 2026046 A2 gezeigt. Ein Pulslaufzeit-basiertes Füllstandsmessgerät, bei dem die Wiederholfrequenz in Abhängigkeit der von der Signallaufzeit-abhängigen Dämpfung geregelt wird, ist in der Veröffentlichungsschrift EP 01072871 A2 offenbart.

Puls-Laufzeit-basierte Füllstandsmessgeräte nach dem Stand der Technik arbeiten bei Mikrowellen-Frequenzen in einem Bereich zwischen 0.2 GHz und 100 GHz. Hierbei ist es Prinzip-bedingt notwendig, dass die Frequenz möglichst keiner Schwankung unterliegt, damit die Füllstandsmessung exakte Werte liefert. Die Wahl der Frequenz hat zudem einen starken Einfluss auf die Auslegung des Füllstandsmessgerätes. Sie wirkt sich unter anderem auf die Geometrie der Sende- bzw. Empfangs-Antenne aus. Je höher die Frequenz ist, desto kleiner kann die Antenne dimensioniert werden, ohne dass sich deren Abstrahlkegel aufweitet.

Der Vorteil einer kleinen Antenne besteht darin, dass das Füllstandsmessgerät insgesamt kompakter ausgestaltet werden kann. Durch den geringeren Platzverbrauch wird somit die Anordnung am Behälter vereinfacht.

Der Vorteil eines engen Abstrahlkegels bzw. stark gebündelter Mikrowellen-Pulse besteht zum einen darin, dass die Signal-Effizienz steigt, da die Intensität der reflektierten Mikrowellen-Pulse zunimmt. Zum anderen werden solche Störechos reduziert, die durch Reflektion an peripheren Objekten, wie z. B. der Behälterwand, entstehen können.

Aus diesen Zusammenhängen ergibt sich, dass die Wahl einer möglichst hohen Frequenz der Mikrowellen-Pulse vorteilhaft ist. Denn hierdurch kann selbst bei einer kleinen Antenne, beispielsweise in einem sehr kleinen Flansch realisiert, ein enger Abstrahlkegel erreicht werden. Diese Überlegungen gelten nicht nur für höherfrequente Mikrowellen-Pulse, sondern lassen sich auch auf noch sehr viel höherfrequente Pulse im Terahertz-Bereich (im Folgenden als THz abgekürzt: Im Rahmen dieser Erfindung bezieht sich dieser Bereich auf elektromagnetische Wellen in einem Frequenzbereich zwischen 300 GHz und 3 THz) übertragen.

Nach dem Stand der Technik sind bereits technische Lösungen zur Erzeugung von elektromagnetischen Wellen im THz-Bereich bekannt: Beispielsweise können so genannte "Freie-Elektronen-Laser" eingesetzt werden. Durch diese können elektromagnetische Wellen im THz-Bereich mit einer vergleichsweise stabilen Frequenz erzeugt werden. Als Hauptkomponente umfassen diese Laser jedoch einen sehr komplexen Hochenergie-Teilchenbeschleuniger, so dass eine kompakte und leistungsarme Bauform eines solchen Lasers de facto nicht möglich ist.

Unter dem Begriff "Gunn-Element" bekannte Halbleiterbauteile, welche aus n-dotierten Zonen mit verscheiden starker Dotierung bestehen, sind ebenfalls in der Lage, elektromagnetische Wellen im THz-Bereich zu erzeugen. Da es sich jedoch um nichtlineare elektrische Bauteile handelt, ist die Frequenz der elektromagnetischen Wellen im THz-Bereich bei Verwendung solcher Gunn-Elemente sehr instabil.

Obwohl elektromagnetische Pulse im THz-Bereich aufgrund der genannten Gründe prinzipiell vorteilhaft gegenüber Mikrowellen-Pulsen sind, bilden die oben erwähnten technischen Lösungen zur THz-Wellen-Erzeugung also keine geeignete Grundlage zur Übertragung des Puls-Laufzeit-Verfahrens auf eine Füllstandsmessung mittels THz-Pulsen. Entweder sind die beschriebenen Verfahren zur THz-Wellen-Erzeugung unter vertretbarem Aufwand technisch nicht umsetzbar. Oder sie sind nicht in der Lage, THz-Pulse mit einer Frequenz, die stabil genug für eine exakte Füllstandsbestimmung mittels des Puls-Laufzeit-Verfahrens ist, zu erzeugen.

Der Erfindung liegt daher die Aufgabe zugrunde, ein Verfahren zur exakten Füllstandsmessung auf Basis von THz-Pulsen sowie ein zur Ausführung dieses Verfahrens geeignetes Füllstandsmessgerät bereitzustellen.

Die Erfindung löst diese Aufgabe durch ein Verfahren zur Messung des Füllstands (L) eines in einem Behälter befindlichen Füllgutes oder zur Bestimmung des Abstandes (h-L) zu einem Objekt mittels THz-Pulsen mittels THz-Pulsen im Allgemeinen. Hierzu umfasst das Verfahren folgende Verfahrensschritte:
- Ein THz-Puls wird in Richtung des Füllgutes ausgesendet,
- der THz-Puls wird an der Oberfläche des Füllgutes reflektiert,
- der reflektierte THz-Puls wird nach einer vom Füllstand (L) abhängigen Laufzeit (t) empfangen.

Hierbei werden die Verfahrensschritte zyklisch mit einer Wiederholfrequenz (fₚᵤₗₛ) wiederholt und die Wiederholfrequenz (fₚᵤₗₛ) derart in Abhängigkeit der Laufzeit (t) gesteuert, dass sich die Wiederholfrequenz (fₚᵤₗₛ) bei kürzer werdender Laufzeit (t) erhöht und bei länger werdender Laufzeit (t) verringert. Erfindungsgemäß wird anhand der Wiederholfrequenz (fₚᵤₗₛ) der Füllstand (L) bestimmt, und nicht, wie nach dem Puls-Laufzeit-Verfahren üblich, anhand der Laufzeit (t).

Der Vorteil des erfindungsgemäßen Verfahrens besteht darin, dass eine exakte Füllstandsbestimmung auf Basis von THz-Pulsen durchgeführt werden kann, auch wenn die Frequenz der THz-Pulse erheblich schwankt. Es können daher sehr einfach aufgebaute Pulserzeugungs-Einheiten mit vergleichsweise geringen Anforderungen an deren Frequenzstabilität verwendet werden.

Erfindungsgemäß ist die Wiederholfrequenz (fₚᵤₗₛ) proportional zu dem Kehrwert der Summe aus der Laufzeit (t) und einer vordefinierten Zeitverzögerung (t_{delay}). Hierdurch kann der Nahbereich des Füllstandsmessgerätes, in dem eventuell systematische Störsignalanteile erzeugt werden, ausgeblendet werden. Dabei wird die Tiefe des Nahbereichs durch den Wert der Zeitverzögerung (t_{delay}) definiert.

Des Weiteren wird die Aufgabe, die der Erfindung zugrunde liegt, durch ein Füllstandsmessgerät zur Ausführung des in zumindest einem der vorhergehenden Ansprüche beschriebenen Verfahrens gelöst. Hierzu umfasst das Füllstandsmessgerät nachfolgende Komponenten:
- Eine Pulserzeugungs-Einheit zur periodischen Erzeugung eines THz-Pulses mit einer Wiederholfrequenz (fₚᵤₗₛ),
- einen ersten Wellenleiter, mit
   - einem Signal-Eingang, über den der THz-Puls von der Pulserzeugungs-Einheit in den Wellenleiter eingekoppelt wird,
   - eine sich an den Signal-Eingang anschließende Wellenübertragungs-Einheit,
   - eine sich an die Wellenübertragungs-Einheit anschließende Antennen-Einheit, zum Aussenden des THz-Pulses in den Behälter und zum Empfang des an der Oberfläche des Füllgutes reflektierten THz Pulses nach einer vom Füllstand (L) abhängigen Laufzeit (t), und
   - einen an der Wellenübertragungs-Einheit angeordneten Signal-Ausgang, zur Erzeugung eines elektrischen Steuersignals (S) anhand des reflektierten THz-Pulses.

Außerdem umfasst das erfindungsgemäße Füllstandsmessgerät eine Steuer-/AuswerteEinheit zur Steuerung der Pulserzeugungs-Einheit und/oder zur Bestimmung des Füllstandes (L), wobei die Steuer-/Auswerte-Einheit eine Verzögerungsschaltung zur zeitlichen Verzögerung (t_{delay}) des elektrischen Steuersignals (S) umfasst.

Eine mögliche Ausgestaltungsvariante bezüglich der Pulserzeugungs-Einheit des erfindungsgemäßen Füllstandsmessgerätes sieht vor, dass die Pulserzeugungs-Einheit zumindest eine erste Oszillator-Einheit und eine zweite Oszillator-Einheit, welche jeweils zur Erzeugung von elektromagnetische Wellen im Mikrowellenbereich dienen, und einen Mischer zum Mischen der von den Oszillator-Einheiten ausgehenden elektromagnetischen Wellen, umfasst. Basierend auf dieser Ausgestaltungsvariante besteht zudem die Möglichkeit, dass die Pulserzeugungs-Einheit einen kaskadierten Aufbau, mit jeweils zumindest einer ersten Oszillator-Einheit und einer zweiten Oszillator-Einheit und jeweils einem Mischer pro Kaskadenstufe, aufweist.

Unabhängig davon, ob die vorangehend beschriebene Oszillator-Einheit kaskadiert aufgebaut, ist es von Vorteil, wenn die Pulserzeugungs-Einheit zumindest ein Modulationselement aufweist, welches von der ersten Oszillator-Einheit und/oder der zweiten Oszillator-Einheit erzeugte elektromagnetischen Wellen moduliert. Bei der Art der Modulation kann es sich um eine Verstärkung, eine Erzeugung von höher- oder niederfrequenten Oberwellen, oder eine Dämpfung handeln.

Für den Fall, dass das erfindungsgemäße Füllstandsmessgerät eine kaskadiert aufgebaute Pulserzeugungs-Einheit aufweist, besteht eine vorteilhafte Erweiterung des Füllstandsmessgerätes darin, dass es zusätzlich
- einen zweiten Wellenleiter mit
   - einem ersten Endstück, welches an der Wellenübertragungs-Einheit angekoppelt ist, und mit
   - einem zweiten Endstück, welches zwischen der ersten Kaskadenstufe sowie der zweiten Kaskadenstufe angekoppelt ist,
umfasst. In diesem Fall ist es zusätzlich von Vorteil, wenn der zweite Wellenleiter eine Modulations-Einheit zur Modulation der Frequenz des reflektierten THz-Pulses umfasst. Durch diese konstruktive Erweiterung kann anstelle bzw. zusätzlich zu einer Zeitverzögerung durch die Steuer-/Auswerte-Einheit eine zeitliche Verzögerung (t_{delay}) des elektrischen Steuersignals (S), und somit ein Ausblenden des Nahbereichs bewirkt werden.

Im Sinne der Erfindung ist es einerseits möglich, dass der erste Wellenleiter und/oder der zweite Wellenleiter aus einem dielektrischen Material gefertigt sind/ist. Solch eine Ausführungsform bietet den Vorteil, dass der erste Wellenleiter beispielsweise als dielektrische Struktur auf einer Leiterkarte aufgebracht sein kann. Hierdurch könnte prinzipiell das gesamte erfindungsgemäße Füllstandsmessgerät auf einer einzigen Leiterkarte intergiert werden. Insbesondere können/kann der erste Wellenleiter und/oder der zweite Wellenleiter jedoch auch als Hohlleiter ausgestaltet sein. Hierdurch stehen potentiell mehr Freiheitsgrade bei der Dimensionierung des ersten und/oder des zweiten Wellenleiters zur Verfügung.

In einer einfachen Ausführung kann der Signal-Eingang des ersten Wellenleiters als Platte oder Blende ausgestaltet sein. Bezüglich einer verbesserten Ankopplung der Pulserzeugungs-Einheit an den ersten Wellenleiter ist es hingegen von Vorteil, wenn der Signal-Eingang als Kegel ausgestaltet ist. Hier ist es insbesondere vorteilhaft, wenn der Signal-Eingang in Bezug zur Wellenübertragungs-Einheit eine Abwinkelung von in etwa 90° aufweist.

Anhand der nachfolgenden Figuren wird die Erfindung näher erläutert. Es zeigt:
Fig. 1: Eine typische Anordnung eines nach dem Puls-Laufzeit Prinzip arbeitenden Füllstandsmessgerätes an einem Behälter,
Fig. 2: eine erste Ausführungsvariante eines erfindungsgemäßen Füllstandsmessgerätes,
Fig. 3: eine erste Ausführungsvariante einer Oszillator-Einheit,
Fig. 4: eine Detailansicht der in Fig. 3 dargestellten Oszillator-Einheit,
Fig. 5: eine zweite, kaskadierte Ausführungsvariante der Oszillator-Einheit, und
Fig. 6: eine zweite Ausführungsvariante des erfindungsgemäßen Füllstandsmessgerätes.

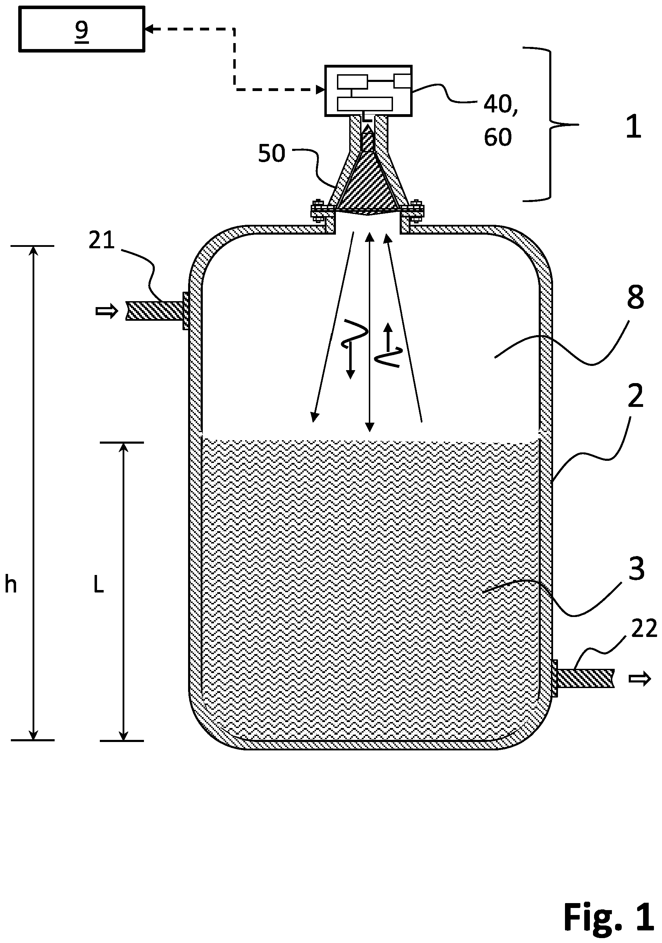

Fig. 1 zeigt eine typische Anordnung eines nach dem Puls-Laufzeit-Prinzip arbeitenden Füllstandsmessgerätes 1 an einem Behälter 2. In einem Prozessraum 8 des Behälters 1 befindet sich ein Füllgut 3, dessen Füllstand L durch das Füllstandsmessgerät 1 zu bestimmen ist. Hierzu ist das Füllstandsmessgerät 1 in einer vorbekannten Einbauhöhe h oberhalb des Füllgutes 3 am Behälter 2 angebracht. Hierbei kann der Behälter 2 bzw. der Prozessraum 8 je nach Anwendung bis mehr als 30 m hoch sein.

Das Füllstandsmessgerät 1 ist derart am Behälter 2 angeordnet, dass es elektromagnetische Pulse in Richtung der Oberfläche des Füllgutes 3 aussendet. Nach Reflektion an der Füllgut-Oberfläche empfängt das Füllstandsmessgerät 1 die reflektierten Pulse in Abhängigkeit der Entfernung h-L zur Füllgut-Oberfläche nach einer Laufzeit t. Bei Füllstandsmessgeräten nach dem Stand der Technik wird der Füllstand L auf Basis der gemessenen Laufzeit t berechnet.

In der Regel ist das Füllstandsmessgerät 1 über ein Bussystem, etwa "PROFIBUS", "HART" oder "Wireless HART" mit einer übergeordneten Einheit 9, beispielsweise einem Prozessleitsystem, verbunden. Hierüber können zum einen Informationen über den Betriebszustand des Füllstandsmessgerätes 1 kommuniziert werden. Es können auch Informationen über den Füllstand L übermittelt werden, um gegebenenfalls am Behälter vorhandene Zuflüsse 21 und/oder Abflüsse 22 zu steuern.

Auch das erfindungsgemäße Füllstandsmessgerät 1 wird am Behälter 2 angeordnet, wie es in Fig. 1 schematisch dargestellt ist. Als wesentliche Hauptkomponenten umfasst es:
- Eine Pulserzeugungs-Einheit 40 zur Erzeugung der THz-Pulse mit einer Wiederholfrequenz fₚᵤₗₛ,
- einen ersten Wellenleiter 50 zum Aussenden der THz-Pulse in den Prozessraum 8 und zum Empfang der THz-Pulse nach Reflektion der THz-Pulse an der Füllgut-Oberfläche nach einer Laufzeit t, sowie
- eine Steuer-/Auswerte-Einheit 60 zur Steuerung der Pulserzeugungs-Einheit 40 und/oder zur Ermittlung des Füllstandes L, wobei die Steuer-/Auswerte-Einheit 60 die Wiederholfrequenz fₚᵤₗₛ derart in Abhängigkeit der Laufzeit t steuert, dass sich die Wiederholfrequenz fₚᵤₗₛ bei kürzer werdender Laufzeit t erhöht und bei länger werdender Laufzeit t verringert, und wobei die Steuer-/Auswerte-Einheit 60 den Füllstand L anhand der Wiederholfrequenz fₚᵤₗₛ bestimmt.

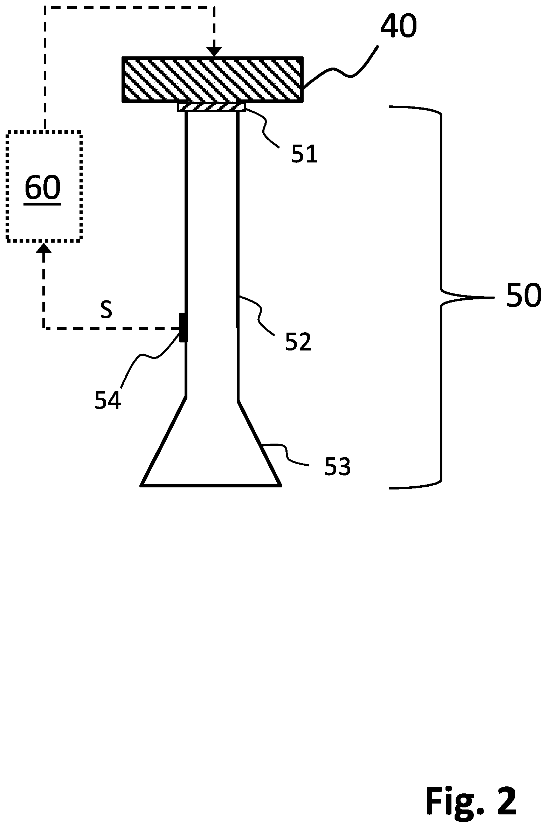

In Fig. 2 ist eine erste Ausführungsvariante des erfindungsgemäßen Füllstandsmessgerätes 1 dargestellt: Bei der gezeigten Ausführungsform ist der erste Wellenleiter 50 als Hohlleiter ausgestaltet, wobei die THz-Pulse der Pulserzeugungs-Einheit 40 über einen Signal-Eingang 51 eingekoppelt werden. Dieser ist in Fig. 2 als flache Platte, vorzugsweise elektrisch leitfähig oder halbleitend, ausgelegt. Alternativ wäre auch ein kegelförmiger Signal-Eingang 51, gegebenenfalls um ungefähr 90° abgewinkelt, denkbar.

An den Signal-Eingang 51 schließt eine Wellenübertragungs-Einheit 52 an. Deren Auslegung wirkt sich auf mehrere Zielgrößen aus:
- Der Gütefaktor der auszusendenden THz-Pulse: Dieser hängt im Wesentlichen von der Dimensionierung der Wellenübertragungs-Einheit 52, der Frequenz der THz-Pulse und deren Pulsbreite ab. Ein in dieser Hinsicht vorteilhaftes Dimensionierungsbeispiel besteht darin, bei einer Frequenz der THz-Pulse von 1.0 THz den Innenquerschnitt der Wellenübertragungs-Einheit 52 als Hohlleiter mit einem Innenquerschnitt von 0.7 x 0.5 mm auszugestalten. In diesem Fall ist der Signal-Eingang 51 mit 0.7 x 0.5 mm zu bemaßen.
- Die Bandbreite(n) der auszusendenden THz-Pulse: Auch diese hängt von der Dimensionierung der Wellenübertragungs-Einheit 52 ab. Zusätzlich dazu kann die Wellenübertragungs-Einheit 52 ein oder mehrere Elemente zur Erzeugung von Oberfrequenzen, beispielsweise entsprechend dimensionierte Blenden innerhalb der Wellenübertragungs-Einheit-52, umfassen.

An die Wellenübertragungs-Einheit 53 schließt eine Antennen-Einheit 53 an, über welche die THz-Pulse in den Prozessraum 8 abgestrahlt werden. Von der Antennen-Einheit 53 werden ebenfalls die an der Füllgut-Oberfläche reflektierten THz-Pulse empfangen. Zum Schutz des Innenraums des ersten Wellenleiters 50 vor Ablagerungen, insbesondere vor durch das Füllgut 3 verursachte Ablagerungen, ist zudem die Anbringung einer Dichtung innerhalb der Antennen-Einheit 53 vorteilhaft (in Fig. 2 nicht dargestellt). Solch eine Dichtung könnte aus einem gasdichten Material ausgeführt werden, beispielsweise aus PS, PTFE, Keramik oder Glas.

Zur Erzeugung eines elektrischen Steuersignals S anhand des reflektierten THz-Pulses ist an der Wellenübertragungs-Einheit 52 ein Signal-Ausgang 54 vorgesehen. Dieser kann beispielsweise als Gitter mit entsprechender Maschendichte zur 3dB Teilauskopplung ausgestaltet sein. Zur Umwandlung des reflektierten THz-Pulses in das elektrische Steuersignal S kann beispielsweise ein Diodenmischer verwendet werden, welcher im Signal-Ausgang 54 angeordnet ist. Vorzugsweise befindet sich der Signal-Ausgang 54 in Bezug zur Wellenübertragungs-Einheit 52 an einer Position, an der die Signalstärke, insbesondere die Spannungsamplitude des reflektierten THz-Pulses innerhalb der Wellenübertragungs-Einheit 52 möglichst maximal ist. Um dies zu erreichen, ist es vorteilhaft, den Signal-Ausgang 54 derart in Phasenlage des reflektierten THz-Pulses anzuordnen, dass Echos, die durch diesen am Signal-Eingang 51 entstehen, destruktiv durch den reflektierten THz-Puls überlagert werden.

Das elektrische Steuersignal S wird der Steuer-/Auswerte-Einheit 60 zugeführt. In dieser kann je nach Ausführungsform eine weitere Aufbereitung und/oder Weiterverarbeitung des Steuersignals S erfolgen:
- Eine Verstärkung bzw. Dämpfung, gegebenenfalls in Abhängigkeit der Signalstärke des reflektierten THz-Pulses,
- eine Filterung zur Eliminierung von Störsignalanteilen, je nach Anforderung als Hoch-, Tief- oder Bandpass,
- eine vordefinierte Zeitverzögerung t_{delay}, durch die die Wiederholfrequenz fₚᵤₗₛ reduziert wird. Dies kann genutzt werden, um einen Nahbereich des Füllstandsmessgerätes 1, in welchem eventuell systematische Störsignalanteile erzeugt werden, auszublenden. Dabei wird die Tiefe des Nahbereichs durch den Wert der Zeitverzögerung t_{delay} definiert, und/oder
- eine Digitalisierung des Steuersignals.

Mittels des aufbereiteten Steuersignals S steuert die Steuer-/Auswerte-Einheit 60 die Pulserzeugungs-Einheit 40 erfindungsgemäß derart, dass sich die Wiederholfrequenz fₚᵤₗₛ bei kürzer werdender Laufzeit t erhöht und bei länger werdender Laufzeit t verringert. Darüber hinaus bestimmt die Steuer-/Auswerte-Einheit 60 den Füllstand L anhand der Wiederholfrequenz fₚᵤₗₛ. Natürlich könnten die oben genannten Funktionen der Steuer-/Auswerte-Einheit 60 auch dezentral durch mehrere separate elektronische Bauteile erreicht werden.

Anstelle der in Fig. 2 dargestellten Ausführungsvariante des erfindungsgemäßen Füllstandsmessgerätes 1, in der der erste Wellenleiter 50 auf Basis einer Hohlleiterstruktur aufgebaut ist, wäre es auch denkbar, den ersten Wellenleiter 50 auf Basis eines dielektrischen Leitermaterials aufzubauen. Solch eine Ausführungsform bietet den Vorteil, dass der erste Wellenleiter 50 beispielsweise als dielektrische Struktur auf einer Leiterkarte aufgebracht sein kann. Hierdurch könnte prinzipiell das gesamte erfindungsgemäße Füllstandsmessgerät 1 auf einer einzigen Leiterkarte intergiert werden.

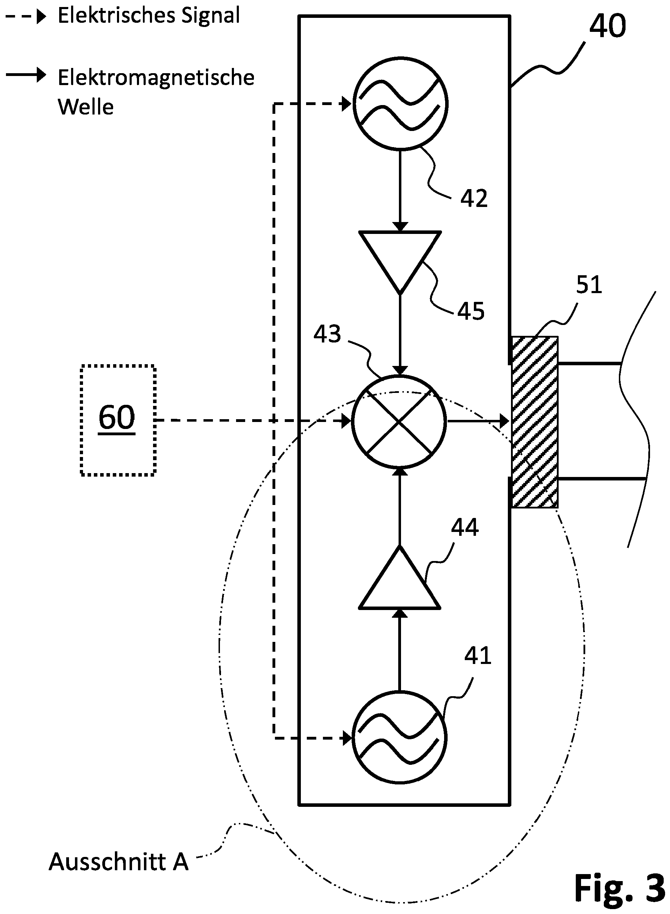

Fig. 3 zeigt eine mögliche Ausführungsform der Pulserzeugungs-Einheit 40, wie sie in dem in Fig. 2 dargestellten Füllstandsmessgerät eingesetzt werden kann: Der dort gezeigte Aufbau basiert ebenfalls auf einem Hohlleiter. In diesem sind an zwei gegenüberliegenden Endbereichen des Hohlleiters zwei Oszillator-Einheiten 41, 42 angeordnet. Sie dienen zur Erzeugung von elektromagnetischen Wellen im Mikrowellen- oder THz-Bereich. Die von den Oszillator-Einheiten 41, 42 erzeugten elektromagnetischen Wellen werden in einem Mischer 43, der in etwa mittig zwischen den zwei Endbereichen im Hohlleiter angeordnet ist, gemischt. Durch das Hochmischen mit einem entsprechenden Multiplikations-/ bzw. Additionsfaktor entsteht eine elektromagnetische Welle im THz-Bereich zur Einkopplung in den Signal-Eingang 51. Als Mischer 43 kann beispielsweise ein Diodenmischer verwendet werden. Dieser ist vorzugsweise unmittelbar zum Signal-Eingang 51 hin angeordnet.

Damit die durch den Mischer 43 erzeugten elektromagnetischen Wellen im THz-Bereich in Form von THz-Pulsen erzeugt werden, gibt es, wie in Fig. 3 dargestellt, zumindest zwei Möglichkeiten zur Ansteuerung:
- Zum einen können die zwei Oszillator-Einheiten 41, 42 durch die Steuer-/Auswerte-Einheit 60 entsprechend der Wiederholfrequenz fₚᵤₗₛ und einer vordefinierten Pulsbreite angesteuert werden. Diese Art der Ansteuerung hat den Vorteil eines relativ geringen Energieverbrauchs, da die Oszillator-Einheiten 41, 42 lediglich getaktet betrieben werden.
- Alternativ kann anstelle der Oszillator-Einheiten 41, 42 der Mischer 43 entsprechend der Wiederholfrequenz fₚᵤₗₛ und der vordefinierten Pulsbreite durch die Steuer-/Auswerte-Einheit 60 angesteuert werden. Die zwei Oszillator-Einheiten 41, 42 werden in diesem Fall kontinuierlich betrieben. Der Vorteil bei dieser Art der Ansteuerung ist, dass die Frequenz des resultierenden THz-Pulses bei kontinuierlichem Betrieb der Oszillator-Einheiten 41, 42 stabiler ist.

Des Weiteren umfasst die in Fig. 3 dargestellte Pulserzeugungs-Einheit 40 zwei Modulationselemente 44, 45, welche jeweils die von den zwei Oszillator-Einheiten 41,42 erzeugten elektromagnetischen Wellen modulieren. Hierzu sind die Modulationselemente 44, 45 vorzugsweise zwischen den Oszillator-Einheiten 41,42 und dem Mischer 43 angeordnet.

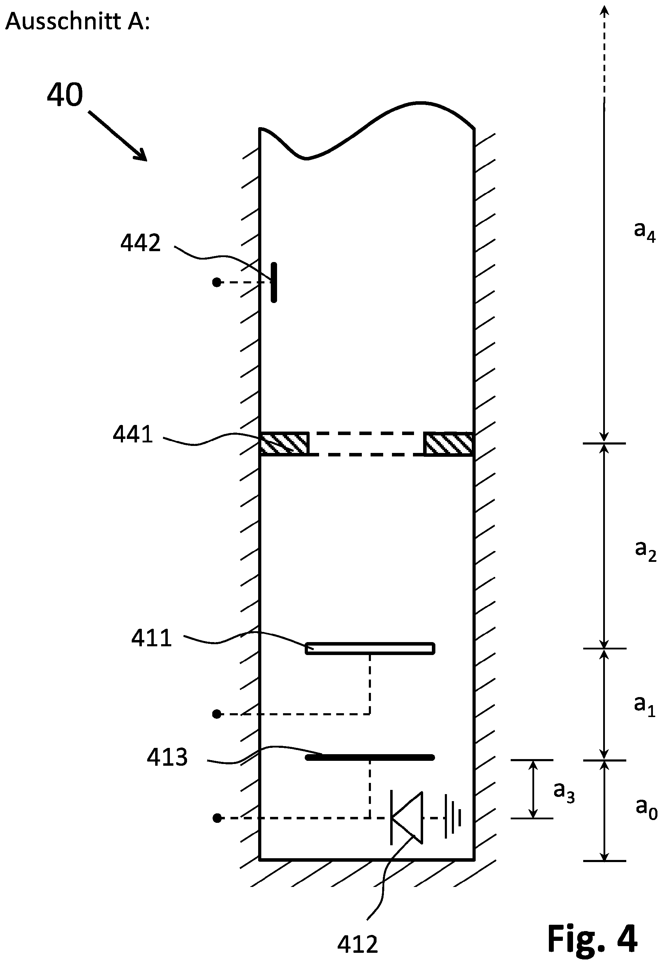

Ein Ausschnitt A der in Fig. 3 dargestellten Pulserzeugungs-Einheit 40 ist im Detail in Fig. 4 dargestellt. Der Ausschnitt A veranschaulicht eine mögliche Variante zur Realisierung der Oszillator-Einheit 41. Bei dieser Variante wird ein Gunn-Element 411, welches elektromagnetische Wellen mit zumindest einer Mikrowellen-Grundfrequenz erzeugt, eingesetzt. Das Gunn-Element 411 wird je nach Ansteuerung entweder durch die Steuer-/Auswerte-Einheit 60 entsprechend der Wiederholfrequenz fₚᵤₗₛ und der vordefinierten Pulsbreite oder mit einer konstanten Versorgungsspannung angesteuert. Der Abstand a₀ + a₁ zwischen dem Gunn-Element 411 und dem Endbereich des Hohlleiters ist dabei vorzugsweise so zu bemessen, dass er unter Berücksichtigung eines möglichen Verkürzungseinflusses des Hohlleiters maximal einem Viertel der Wellenlänge der Mikrowellen-Grundfrequenz entspricht.

Wie in Fig. 4 dargestellt, ist es zur Modulation der zumindest einen Mikrowellen-Grundfrequenz außerdem möglich, zusätzlich zumindest eine im Hohlleiter angeordnete Varaktor-Diode 412 einzusetzen und in der gezeigten Weise an eine Elektrode 413 zu koppeln. Die Varaktor-Diode 412 und die Elektrode 413 sind hierzu über ein entsprechendes Eingangssignal anzusteuern. Bei dem Eingangssignal ist vorzugsweise ein definiertes Rausch-Signal zu verwenden. Denkbar wäre zwecks einfacherer Realisierung jedoch auch ein Sägezahn- oder Sinusförmiges Wechselspannungssignal, insbesondere mit einer Frequenz zwischen 1 MHz und 1 GHz.
Durch den Einsatz der Varaktor-Diode 412 und der Elektrode 413 wird eine Phasenverschiebung der vom Gunn-Element 411 ausgesendeten elektromagnetischen Wellen bewirkt. Dabei ist der Abstand a₁ der Elektrode 413 zum Gunn-Element 411 vorteilhaft so zu wählen, dass er in Addition mit der korrespondierenden Länge zu demjenigen Phasenverschiebungsanteil, der durch die Kapazität der Varaktor-Diode 412 verursacht wird, maximal eine Phasenverschiebung der elektromagnetischen Wellen der vom Gunn-Element 411 ausgesendeten elektromagnetischen Wellen von 90° bewirkt.

Weiterhin ist in Fig. 4 eine mögliche Variante zur Realisierung des Modulationselements 44 gezeigt: In dieser Variante umfasst das Modulationselement 44 eine Blende 441 und einen Ableiter 442. Die Blende 441 hat in erster Linie die Funktion, die von der Oszillator-Einheit 41 erzeugten elektromagnetischen Wellen, welche zumindest die Mikrowellen-Grundfrequenz aufweisen, teilweise zu reflektieren, um durch deren Überlagerung neben der Mikrowellen-Grundfrequenz höherfrequente Anteile zu erzeugen. In diesem Zusammenhang ist es von Vorteil, wenn der Abstand a₁+a₂+a₃ zwischen der Blende 441 und dem Endberiech bzw. der Abstand a₁+a₂ zum Gunn-Element 411 eine andere Länge, als der Abstand a₄ zwischen der Blende 441 und der Wellenübertragungs-Einheit 50, aufweist.

Der Ableiter 442 ist zur Absorption unerwünschter niederfrequenter Anteile der von der Oszillator-Einheit 41 ausgesendeten elektromagnetischen Wellen vorgesehen.

Alternativ zur der Blende 441 gibt es eine weitere Variante zur Erzeugung höherfrequenter Anteile, welche nicht in Fig. 4 dargestellt ist: Diese Variante besteht in der Teilung der von der Oszillator-Einheit 41 ausgehenden elektromagnetischen Wellen auf zumindest zwei verschieden lange Signalpfade und einer anschließenden Zusammenführung der aufgeteilten Anteile innerhalb der pulserzeugungs-Einheit 40. Durch die Differenz/Differenzen der Signalpfad-Längen entstehen eine oder mehrere Phasendifferenzen, die bei der Überlagerung der aufgeteilten elektromagnetischen Welle zumindest eine vordefinierte Oberfrequenz erzeugt/erzeugen.

Es sei darauf hingewiesen, dass die anhand von Fig. 4 aufgezeigten Umsetzungsbeispiele hinsichtlich des Modulationselements 44 und der Oszillator-Einheit 41 natürlich auch analog auf denjenigen Teil der Pulserzeugungs-Einheit 40, der nicht in Fig. 4 dargestellt ist, übertragbar sind.

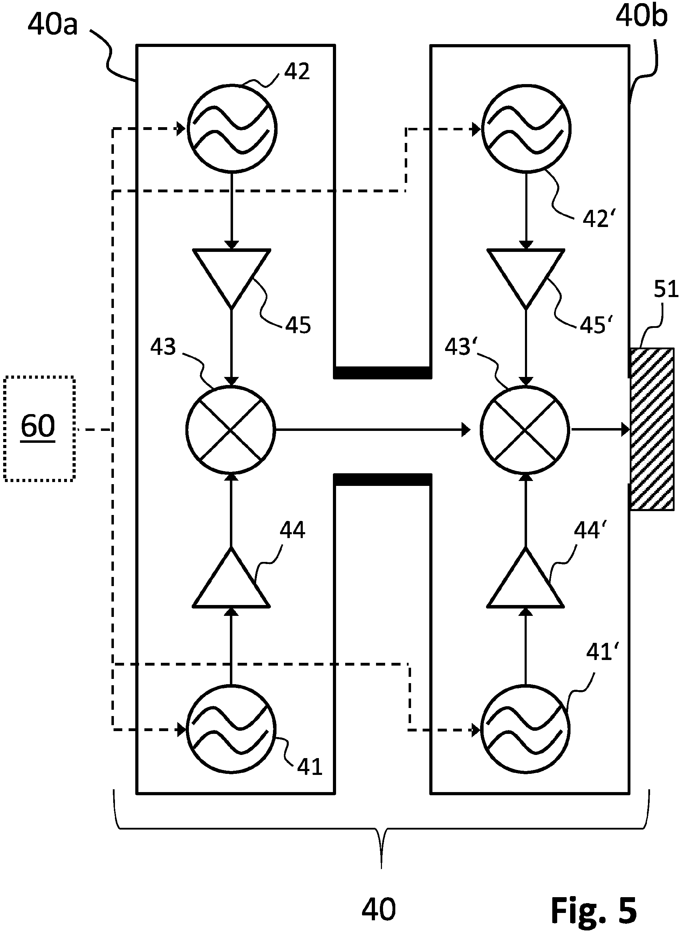

Eine kaskadierte Ausführung der in Fig. 3 oder Fig. 4 dargestellten Pulserzeugungs-Einheit 40 ist in Fig. 5 dargestellt. Bei dieser Ausführung werden in einer ersten Kaskadenstufe 40a elektromagnetische Wellen zweier Oszillator-Einheiten 41, 42 durch einen ersten Mischer 43 hochgemischt, wie es auch bei der in Fig. 3 dargestellten Pulserzeugungs-Einheit 40 der Fall ist. Bei der kaskadierten Ausführung wird die hochgemischte elektromagnetische Welle jedoch nicht direkt dem Signal-Eingang 51 des ersten Wellenleiters 50, sondern einem zweiten Mischer 43' einer zweiten Kaskadenstufe 40b zugeführt. Erst nach weiterem Hochmischen durch den Mischer 43' der zweiten Kaskadenstufe 40b wird der resultierende THz-Puls in den Signal-Eingang 51 eingekoppelt. Die zweite Kaskadenstufe 40b hat in der gezeigten Ausführung einen zur ersten Kaskadenstufe 40a prinzipiell analogen Aufbau.

Die beiden Kaskadenstufen 40a, 40b sind vorzugsweise derart durch die Steuer-/Auswerte-Einheit 60 anzusteuern, dass die Signale der einzelnen Oszillator-Einheiten 41, 41', 42, 42' möglichst nicht korrelieren bzw. möglichst unterschiedlich sind. Hierdurch werden höhere Oberwellen gegenüber den Niedrigeren begünstigt und ein Heruntermischen der Oberwellen verringert.

Im Vergleich zum nicht-kaskadierten Aufbau besteht der Vorteil eines kaskadierten Aufbaus darin, dass entweder höherfrequentere THz-Pulse erzeugt werden können, oder der Multiplikationsfaktor der einzelnen Kaskadenstufen geringer ausgelegt werden kann, ohne dass die Frequenz des resultierenden THz-Pulses vermindert wird. Der Vorteil eines geringeren Multiplikationsfaktors besteht in einem insgesamt höheren Konversionswirkungsgrad an den Mischern 43, 43'. Dadurch wird entweder eine höhere Sendeleistung bei gleichem Energieverbrauch, oder ein niedrigerer Energieverbrauch des Füllstandsmessgerätes 1 erreicht. Somit ergibt sich eine höhere Reichweite, bzw. eine potentiell kompaktere und preisgünstigere Ausgestaltung der Antennen-Einheit 53.

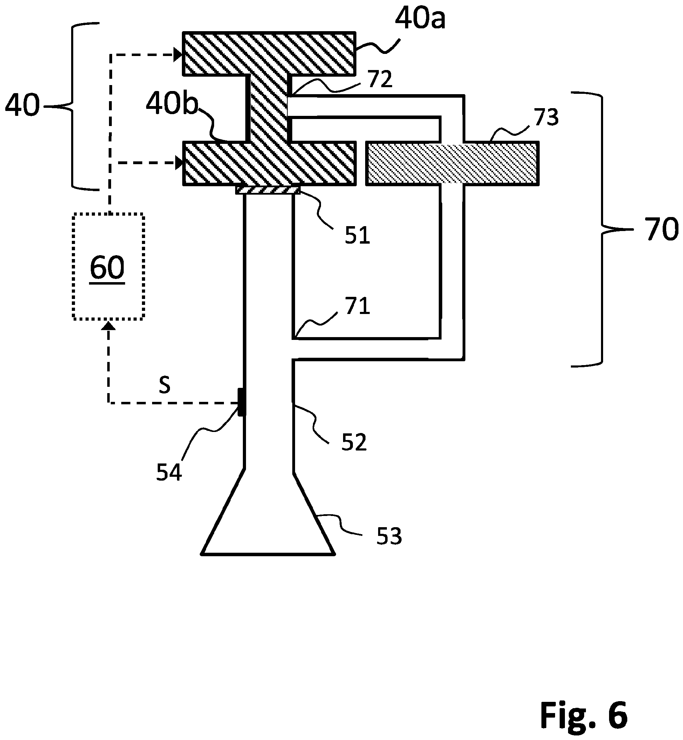

In Fig. 6 ist ein erfindungsgemäßes Füllstandsmessgerät 1, welches eine kaskadierte Pulserzeugungs-Einheit 40 aufweist, dargestellt. Das hier gezeigte Füllstandsmessgerät 1 unterscheidet sich jedoch nicht nur durch den kaskadierten Aufbau der Pulserzeugungs-Einheit 40 von dem in Fig. 2 gezeigten Füllstandsmessgerät 1. Zudem umfasst die in Fig. 6 dargestellte Ausführungsvariante einen zweiten Wellenleiter 70. Die Funktion des zweiten Wellenleiters 70 ist es, die Erzeugung des Steuersignals S am Signal-Ausgang 54 nach Empfang des reflektierten THz-Pulses zu verzögern.

Hierzu ist der zweite Wellenleiter 70 über ein erstes Endstück 71 an die Wellenübertragungs-Einheit-52 angekoppelt. Über ein zweites Endstück 72 ist der zweite Wellenleiter 70 zwischen der ersten Kaskadenstufe 40a und der zweiten Kaskadenstufe 40b der Pulserzeugungs-Einheit 40 angekoppelt. Zudem umfasst der zweite Wellenleiter 70 eine Modulator-Einheit 73 zum Runtermischen der Frequenz des reflektierten THz-Pulses. Die Modulator-Einheit 73 kann beispielsweise einen Aufbau aufweisen, der prinzipiell analog zum Aufbau der in Fig. 3 gezeigten Pulserzeugungs-Einheit 40 ist. Vorzugsweise ist die Modulator-Einheit 73 und/oder der zweite Wellenleiter 70 derart zu dimensionieren, dass die Frequenz des reflektierten THz-Pulses nach Runtermischen der Frequenz der von der ersten Kaskadenstufe 40a erzeugten elektromagnetischen Welle entspricht.

Durch den zweiten Wellenleiter 70 wird also für die reflektierten THz-Pulse zusätzlichen zur direkten Signalstrecke zwischen der Antennen-Einheit 53 und dem Signal-Ausgang 54 eine weitere, verlängerte Signalstrecke zwischen der Antennen-Einheit 53 und dem Signal-Ausgang 54 bereitgestellt. Dementsprechend sind der erste Wellenleiter 50 und der zweite Wellenleiter vorzugsweise derart zu dimensionieren, dass der reflektierte THz-Puls durch die verlängerte Signalstrecke mit einer höheren Leistung, als über die direkte Signalstrecke, zum Signal-Ausgang geleitet wird.

Durch den zweiten Wellenleiter und der damit verbundenen Signalstrecke wird eine zeitliche Verzögerung (t_{delay}) des Steuersignals S bewirkt. Somit bietet die in Fig. 6 gezeigte Ausführungsform den Vorteil, dass die Steuer-/Auswerte-Einheit 60 in diesem Fall keine zusätzliche Zeitverzögerungseinheit umfassen muss. Ein weiterer Vorteil besteht darin, dass der reflektierte THz-Puls effizienter vom ausgesendeten THz-Puls entkoppelt wird, so dass auch sehr schwach reflektierte THz-Pulse detektiert werden können.

### Bezugszeichenliste

- 1: Füllstandsmessgerät
- 2: Behälter
- 3: Füllgut
- 8: Prozessraum
- 9: Übergeordnete Einheit
- 21: Zufluss
- 22: Abfluss
- 40: Pulserzeugungs-Einheit
- 40a, 40b: Kaskadenstufe
- 41, 41', 42, 42': Oszillator-Einheit
- 43, 43': Mischer
- 44, 44', 45, 45': Modulationselement
- 50: Erster Wellenleiter
- 51: Signal-Eingang
- 52: Wellenübertragungs-Einheit
- 53: Antennen-Einheit
- 54: Signal-Ausgang
- 60: Steuer-/Auswerte-Einheit
- 70: Zweiter Wellenleiter
- 71: Erstes Endstück
- 72: Zweites Endstück
- 73: Modulator-Einheit
- 411: Gunn-Element
- 412: Varaktor-Diode
- 413: Elektrode
- 441: Blende
- 442: Ableiter
- a₀ - a₄: Abstand
- fₚᵤₗₛ: Wiederholfrequenz
- h: Einbauhöhe
- L: Füllstand
- S: Steuersignal
- t: Laufzeit
- t_{delay}: Zeitverzögerung

## Patentansprüche

1. Puls-basiertes Verfahren zur Messung des Füllstands (L) eines in einem Behälter (3) befindlichen Füllgutes (2), folgende Verfahrensschritte umfassend:
- Ein Puls wird in Richtung des Füllgutes (2) ausgesendet,
- der Puls wird an der Oberfläche des Füllgutes (2) reflektiert,
- der reflektierte Puls wird nach einer vom Füllstand (L) abhängigen Laufzeit (t) empfangen,
wobei die Verfahrensschritte zyklisch mit einer Wiederholfrequenz (fₚᵤₗₛ) wiederholt werden,
wobei die Wiederholfrequenz (fₚᵤₗₛ) in Abhängigkeit der Laufzeit (t) gesteuert wird, und wobei anhand der Wiederholfrequenz (fₚᵤₗₛ) der Füllstand (L) bestimmt wird,
**dadurch gekennzeichnet,**
**dass** es sich bei den Pulsen um THz-Pulse handelt,
**dass** sich die Wiederholfrequenz (fₚᵤₗₛ) bei kürzer werdender Laufzeit (t) erhöht und bei länger werdender Laufzeit (t) verringert, und
**dass** die Wiederholfrequenz (fₚᵤₗₛ) proportional zu dem Kehrwert der Summe aus der Laufzeit (t) und einer vordefinierten Zeitverzögerung (t_{delay}) ist.

2. Füllstandsmessgerät, ausgeführt zur Ausführung des in Anspruch 1 beschriebenen Verfahrens wobei das Füllstandsmessgerät folgende Kompetenten aufweist:
- Eine Pulserzeugungs-Einheit (40) zur periodischen Erzeugung eines THz-Pulses mit einer Wiederholfrequenz (fₚᵤₗₛ),
- einen ersten Wellenleiter (50), mit
• einem Signal-Eingang (51), über den der THz-Puls von der Pulserzeugungs-Einheit (40) in den Wellenleiter (50) eingekoppelt wird,
• eine sich an den Signal-Eingang (51) anschließende Wellenübertragungs-Einheit (52),
• eine sich an die Wellenübertragungs-Einheit (52) anschließende Antennen-Einheit (53), zum Aussenden des THz-Pulses in den Behälter (2) und zum Empfang des an der Oberfläche des Füllgutes (3) reflektierten THz Pulses nach einer vom Füllstand (L) abhängigen Laufzeit (t), und
• einen an der Wellenübertragungs-Einheit (52) angeordneten Signal-Ausgang (54), zur Erzeugung eines elektrischen Steuersignals (S) anhand des reflektierten THz-Pulses,
und
- eine Steuer-/Auswerte-Einheit (60) zur Steuerung der Pulserzeugungs-Einheit (40) und/oder zur Bestimmung des Füllstandes (L), wobei die Steuer-/AuswerteEinheit (60)
• eine Verzögerungsschaltung zur zeitlichen Verzögerung (t_{delay}) des elektrischen Steuersignals (S)
umfasst.

3. Füllstandsmessgerät nach Anspruch 2, wobei die Pulserzeugungs-Einheit (40) zumindest eine erste Oszillator-Einheit (41), eine zweite Oszillator-Einheit (42) und einen Mischer (43) umfasst.

4. Füllstandsmessgerät nach Anspruch 3, wobei die Pulserzeugungs-Einheit (40) einen kaskadierten Aufbau, mit jeweils zumindest einer ersten Oszillator-Einheit (41, 41') und einer zweiten Oszillator-Einheit (42, 42') und jeweils einem Mischer (43, 43') pro Kaskadenstufe (40a, 40b), aufweist.

5. Füllstandsmessgerät nach zumindest einem der Ansprüche 3 oder 4, wobei die Pulserzeugungs-Einheit (40) zumindest ein Modulationselement (44, 44', 45, 45') aufweist, welches von der ersten Oszillator-Einheit (41,41') und/oder der zweiten Oszillator-Einheit (42, 42') erzeugte elektromagnetischen Wellen moduliert.

6. Füllstandsmessgerät nach Anspruch 4 oder 5, des weiteren umfassend:
- einen zweiten Wellenleiter (70) mit
• einem ersten Endstück (71), welches an der Wellenübertragungs-Einheit (52) angekoppelt ist, und mit
• einem zweiten Endstück (72), welches zwischen der ersten Kaskadenstufe (40a) sowie der zweiten Kaskadenstufe (40b) angekoppelt ist.

7. Füllstandsmessgerät nach Anspruch 6, wobei der zweite Wellenleiter (70) eine Modulations-Einheit (73) zur Modulation der Frequenz des reflektierten THz-Pulses umfasst.

8. Füllstandsmessgerät nach zumindest einem der Ansprüche 2 bis 7, wobei der erste Wellenleiter (50) und/oder der zweite Wellenleiter (70) aus einem dielektrischen Material gefertigt sind/ist.

9. Füllstandsmessgerät nach zumindest einem der Ansprüche 2 bis 7, wobei der erste Wellenleiter (50) und/oder der zweite Wellenleiter (70) als Hohlleiter ausgestaltet sind/ist.

10. Füllstandsmessgerät nach zumindest einem der Ansprüche 2 bis 9, wobei der Signal-Eingang (51) als Platte oder Blende ausgestaltet ist.

11. Füllstandsmessgerät nach zumindest einem der Ansprüche 2 bis 9, wobei der Signal-Eingang (51) als Kegel ausgestaltet ist.

12. Füllstandsmessgerät nach Anspruch 11, wobei der Signal-Eingang (51) in Bezug zur Wellenübertragungs-Einheit (52) eine Abwinkelung von in etwa 90° aufweist.

## Claims

1. Pulse-based process for measuring the level (L) of a medium (2) located in a vessel (3), said process comprising the following steps:
- a pulse is emitted in the direction of the medium (2),
- the pulse is reflected at the surface of the medium (2),
- the reflected pulse is received after a transit time (t) that depends on the level (L),
wherein the process steps are repeated cyclically with a repetition frequency (fₚᵤₗₛ),
wherein the repetition frequency (fₚᵤₗₛ) is controlled depending on the transit time (t), and
wherein the level (L) is determined on the basis of the repetition frequency (fₚᵤₗₛ), **characterized in that**
the pulses are THz pulses,
the repetition frequency (fₚᵤₗₛ) is increased as the transit time (t) decreases and is decreased as the transit time (t) increases, and
the repetition frequency (fₚᵤₗₛ) is proportional to the inverse of the sum of the transit time (t) and a predefined time delay (t_{delay}).

2. Level transmitter, designed to perform the process described in Claim 1,
wherein the level transmitter comprises the following components:
- a pulse generation unit (40) for the periodic generation of a THz pulse with a repetition frequency (fₚᵤₗₛ),
- a first waveguide (50), with
• a signal input (51) via which the THz pulse coming from the pulse generation unit (40) is coupled into the waveguide (50),
• a wave transmission unit (52) following on from the signal input (51),
• an antenna unit (53) following on from the wave transmission unit (52) designed to transmit the THz pulse to the vessel (2) and to receive the THz pulse reflected at the surface of the medium (3) after a transit time (t) that depends on the level (L), and
• a signal output (54) arranged at the wave transmission unit (52), said output serving to generate an electrical control signal (S) on the basis of the reflected THz pulse,
and
- a control/evaluation unit (60) designed to control the pulse generation unit (40) and/or to determine the level (L), wherein the control/evaluation unit (60) comprises
• a delay circuit designed to delay (t_{delay}) the electrical control signal (S).

3. Level transmitter as claimed in Claim 2, wherein the pulse generation unit (40) comprises at least a first oscillator unit (41), a second oscillator unit (42) and a mixer (43).

4. Level transmitter as claimed in Claim 3, wherein the pulse generation unit (40) has a cascade structure, in each case with at least a first oscillator unit (41, 41') and a second oscillator unit (42, 42') and a mixer (43, 43') per cascade level (40a, 40b).

5. Level transmitter as claimed in at least one of the Claims 3 or 4, wherein the pulse generation unit (40) comprises at least a modulation element (44, 44', 45, 45') which modulates electromagnetic waves generated by the first oscillator unit (41, 41') and/or by the second oscillator unit (42, 42').

6. Level transmitter as claimed in Claim 4 or 5, further comprising:
- a second waveguide (70) with
• a first end piece (71) coupled to the wave transmission unit (52), and with
• a second end piece (72) coupled between the first level (40a) of the cascade and the second level (40b) of the cascade.

7. Level transmitter as claimed in Claim 6, wherein the second waveguide (70) comprises a modulation unit (73) designed to modulate the frequency of the reflected THz pulse.

8. Level transmitter as claimed in at least one of the Claims 2 to 7, wherein the first waveguide (50) and/or the second waveguide (70) is/are made of a dielectric material.

9. Level transmitter as claimed in at least one of the Claims 2 to 7, wherein the first waveguide (50) and/or the second waveguide (70) is/are designed as a hollow waveguide.

10. Level transmitter as claimed in at least one of the Claims 2 to 9, wherein the signal input (51) is designed as a plate or panel.

11. Level transmitter as claimed in at least one of the Claims 2 to 9, wherein the signal input (51) is designed as a cone.

12. Level transmitter as claimed in Claim 11, wherein the signal input (51) has an angle of around 90° in relation to the wave transmission unit (52).

## Revendications

1. Procédé basé sur les impulsions et destiné à la mesure du niveau (L) d'un produit (2) se trouvant dans un réservoir (3), lequel procédé comprend les étapes suivantes :
- une impulsion est émise en direction du produit (2),
- l'impulsion est réfléchie à la surface du produit (2),
- l'impulsion réfléchie est reçue après un temps de transit (t) qui dépend du niveau (L),
les étapes du procédé étant répétées de manière cyclique à une fréquence de répétition (fₚᵤₗₛ),
la fréquence de répétition (fₚᵤₗₛ) étant commandée en fonction du temps de transit (t), et
le niveau (L) étant déterminé sur la base de la fréquence de répétition (fₚᵤₗₛ),
**caractérisé**
**en ce que** les impulsions sont des impulsions THz,
**en ce que** la fréquence de répétition (fₚᵤₗₛ) augmente lorsque le temps de transit (t) devient plus court et diminue lorsque le temps de transit (t) devient plus long, et
**en ce que** la fréquence de répétition (fₚᵤₗₛ) est proportionnelle à l'inverse de la somme du temps de transit (t) et d'un retard (t_{delay}).

2. Transmetteur de niveau, conçu pour la réalisation du procédé décrit dans la revendication 1,
le transmetteur de niveau comprenant les composants suivants :
- une unité de génération d'impulsions (40) destinée à générer périodiquement une impulsion THz avec une fréquence de répétition (fₚᵤₗₛ),
- un premier guide d'ondes (50), avec
• une entrée de signal (51), par l'intermédiaire de laquelle l'impulsion THz provenant de l'unité de génération d'impulsions (40) est couplée dans le guide d'ondes (50),
• une unité de transmission d'ondes (52) reliée à l'entrée de signal (51),
• une unité d'antenne (53) reliée à l'unité de transmission d'ondes (52) destinée à émettre l'impulsion THz dans le réservoir (2) et à recevoir l'impulsion THz réfléchie à la surface du produit (3) après un temps de transit (t) dépendant du niveau (L), et
• une sortie de signal (54) disposée au niveau de l'unité de transmission d'ondes (52), laquelle sortie est destinée à générer un signal de commande électrique (S) sur la base de l'impulsion THz réfléchie,
et
- une unité de commande / d'exploitation (60) destinée à commander l'unité de génération d'impulsions (40) et/ou à déterminer le niveau (L), l'unité de commande / d'exploitation (60) comprenant
• un circuit de retard destiné à générer un retard (t_{delay}) du signal de commande électrique (S).

3. Transmetteur de niveau selon la revendication 2, pour lequel l'unité de génération d'impulsions (40) comprend au moins une première unité d'oscillateur (41), une deuxième unité d'oscillateur (42) et un mélangeur (43).

4. Transmetteur de niveau selon la revendication 3, pour lequel l'unité de génération d'impulsions (40) présente une structure en cascade, avec à chaque fois au moins une première unité d'oscillateur (41, 41') et une deuxième unité d'oscillateur (42, 42') et à chaque fois un mélangeur (43, 43') par étage de cascade (40a, 40b).

5. Transmetteur de niveau selon au moins l'une des revendications 3 ou 4, pour lequel l'unité de génération d'impulsions (40) comprend au moins un élément de modulation (44, 44', 45, 45'), lequel élément module les ondes électromagnétiques générées par la première unité d'oscillateur (41, 41') et/ou par la deuxième unité d'oscillateur (42, 42').

6. Transmetteur de niveau selon la revendication 4 ou 5, comprenant en outre :
- un deuxième guide d'ondes (70) avec
• une première partie d'extrémité (71) couplée à l'unité de transmission d'ondes (52), et avec
• une deuxième partie d'extrémité (72) couplée entre le premier étage (40a) de la cascade et le deuxième étage (40b) de la cascade.

7. Transmetteur de niveau selon la revendication 6, pour lequel le deuxième guide d'ondes (70) comprend une unité de modulation (73) destinée à moduler la fréquence de l'impulsion THz réfléchie.

8. Transmetteur de niveau selon au moins l'une des revendications 2 à 7, pour lequel le premier guide d'ondes (50) et/ou le deuxième guide d'ondes (70) est/sont constitué(s) d'un matériau diélectrique.

9. Transmetteur de niveau selon au moins l'une des revendications 2 à 7, pour lequel le premier guide d'ondes (50) et/ou le deuxième guide d'ondes (70) est/sont conçu(s) en tant que guide d'ondes creux.

10. Transmetteur de niveau selon au moins l'une des revendications 2 à 9, pour lequel l'entrée de signal (51) est conçue en tant que plaque ou en tant qu'écran.

11. Transmetteur de niveau selon au moins l'une des revendications 2 à 9, pour lequel l'entrée de signal (51) est conçue en tant que cône.

12. Transmetteur de niveau selon la revendication 11, pour lequel le signal d'entrée (51) présente un angle d'environ 90° par rapport à l'unité de transmission d'ondes (52).
